# EUROPÄISCHE PATENTSCHRIFT

(11) **EP 3 646 236 B1**
(45) Veröffentlichungstag und Bekanntmachung des Hinweises auf die Patenterteilung: **24.12.2025**
(21) Anmeldenummer: 18740117.9
(22) Anmeldetag: 27.06.2018
(51) Int. Cl.: G06V 10/24, G06V 40/16, G06T 7/70

(54) **VORRICHTUNG, VERFAHREN UND COMPUTERPROGRAMM ZUM KORRIGIEREN EINES GESICHSBILDES EINER PERSON**
APPARATUS, METHOD AND COMPUTER PROGRAM FOR CORRECTING A FACIAL IMAGE OF A PERSON
DISPOSITIF, PROCÉDÉ ET PROGRAMME INFORMATIQUE PERMETTANT DE CORRIGER UNE IMAGE FACIALE D'UNE PERSONNE

(30) Priorität: 29.06.2017 DE 102017114497
(43) Veröffentlichungstag der Anmeldung: 06.05.2020
(73) Patentinhaber: Bundesdruckerei GmbH, 10969 Berlin (DE)
(72) Erfinder: WOLF, Andreas, 13158 Berlin (DE)
(74) Vertreter: Patentship Patentanwaltsgesellschaft mbH
(86) Internationale Anmeldenummer: PCT/EP2018/067179
(87) Internationale Veröffentlichungsnummer: WO 2019/002333

(56) Entgegenhaltungen:
- EP-A2- 2 755 164
- US-A1- 2007 104 362
- US-A1- 2016 335 495
- PHILIPP FECHTELER ET AL: "Fast and High Resolution 3D Face Scanning", IMAGE PROCESSING, 2007. ICIP 2007. IEEE INTERNATIONAL CONFERENCE ON, IEEE, PI, 1 September 2007 (2007-09-01), pages III - 81, XP031158009, ISBN: 978-1-4244-1436-9

## Beschreibung

Die vorliegende Erfindung betrifft das Gebiet der Erfassung von Gesichtsbildern für Identifikationsdokumente, insbesondere Personalausweise und Reisepässe.

Die Offenlegungsschrift EP 2 755 164 A2 betrifft das Gebiet der Videokommunikation.

Die Offenlegungsschrift US 2016/335495 A1 offenbart eine Vorrichtung und ein Verfahren zum Erfassen eines Gesichtsbildes.

Die Druckschrift "PHILIPP FECHTELER ET AL: "Fast and High Resolution 3D Face Scanning", IMAGE PROCESSING, 2007. ICIP 2007. IEEE INTERNATIONAL CONFERENCE ON, IEEE, Pl, 1. September 2007 (2007-09-01), Seiten III-81, XP031158009, ISBN: 978-1-4244-1436-9)" beschäftigt sich mit der Erfassung von 3D-Gesichtsmodellen.

Die Offenlegungsschrift US 2007/104362 A1 offenbart ein Gesichtserkennungsverfahren.

Für verschiedene Anwendungen im Bereich der Identifikation von Personen ist eine eindeutige Zuordnung der Personen zu jeweiligen Identifikationsdokumenten von besonderer Bedeutung. Insbesondere zur automatisierten Gesichtserkennung sind standardisierte Gesichtsbilder der Personen als Referenzdaten wünschenswert. In unterschiedlichen Standardisierungsgremien, welche sich mit der Standardisierung von Gesichtsbildern für Identifikationsdokumente befassen, beispielsweise der ISO oder der ICAO, werden gegenwärtig standardisierte Entfernungen und standardisierte Perspektiven bei der Erfassung von Gesichtsbildern diskutiert. Hierbei stellt sich u.a. die Frage, ob eine Mindestentfernung zwischen einer Bildkamera und einem Gesicht einer Person bei der Erfassung des Gesichtsbildes verbindlich festgelegt werden sollte.

Bei der automatisierten Gesichtserkennung ist ferner zu berücksichtigen, dass eine ungenügende Bildqualität typischerweise zu höheren Klassifikationsfehlern führt. Insbesondere für sicherheitskritische Anwendungen, wie beispielsweise der Grenzkontrolle, werden ferner durch den Gesetzgeber maximale Falschakzeptanzraten vorgeschrieben, beispielsweise 0,1%. Ferner führen ungeeignete Gesichtsbilder typischerweise zu höheren Falschrückweisungsraten. Hierdurch wird sowohl die Benutzerfreundlichkeit der Systeme zur automatisierten Gesichtserkennung als auch der Personendurchsatz derartiger Systeme negativ beeinflusst, da hierdurch manuelle Nachkontrollen erforderlich werden können.

Bei der Erfassung von Gesichtsbildern für Identifikationsdokumente ist ferner zu berücksichtigen, dass der verfügbare Platz in Fotokiosken oder Fotokabinen üblicherweise beschränkt ist. Zudem ist eine Erfassung von Gesichtsbildern für nicht-hoheitliche Anwendungen mittels Smartphones wünschenswert, bei denen die Personen Selbstportraits mittels einer eingebauten Bildkamera erfassen können.

Es ist daher eine Aufgabe der vorliegenden Erfindung, ein effizientes Konzept zum Erfassen und Korrigieren eines Gesichtsbildes einer Person zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Erfindung basiert auf der Erkenntnis und schließt diese mit ein, dass die obige Aufgabe durch eine perspektivische Verzerrung eines erfassten Gesichtsbildes einer Person gelöst werden kann, wobei eine drei-dimensionale Bildtransformation durchgeführt werden kann. Das Gesichtsbild kann dabei in einer beliebigen ersten Raumlage zwischen der Bildkamera und dem Gesicht der Person erfasst werden und derart perspektivisch verzerrt werden, dass das korrigierte Gesichtsbild einer zweiten Raumlage zugeordnet ist. Die zweite Raumlage kann beispielsweise durch einen Standard vorab festgelegt sein. Für die Bestimmung der ersten Raumlage kann beispielsweise eine Entfernung zwischen der Bildkamera und dem Gesicht der Person sowie eine Gesichtsform des Gesichtes der Person bestimmt werden, welche mit einer Referenzgesichtsform verglichen werden kann. Hierdurch wird u.a. der Umstand genutzt, dass das Gesichtsbild einer Projektion des drei-dimensionalen Gesichtes der Person auf eine zwei-dimensionale Bildebene entspricht. Die perspektivische Verzerrung des Gesichtsbildes kann beispielsweise mittels einer drei-dimensionalen Bildtransformation bzw. Koordinatentransformation durchgeführt werden.

Gemäß einem ersten Aspekt betrifft die Erfindung eine Vorrichtung zum Korrigieren eines Gesichtsbildes einer Person gemäß Anspruch 1.

Gemäß einer Ausführungsform ist die Raumlagebestimmungseinrichtung relativ zu der Bildkamera ortsfest angeordnet. Dadurch wird der Vorteil erreicht, dass zunächst eine Hilfsraumlage der Raumlagebestimmungseinrichtung relativ zu dem Gesicht der Person bestimmt werden kann, und die erste Raumlage der Bildkamera relativ zu dem Gesicht der Person unter Verwendung der vorbekannten ortsfesten Anordnung sowie der Hilfsraumlage bestimmt werden kann.

Die Raumlagebestimmungseinrichtung ist ausgebildet, die erste Entfernung zwischen der Bildkamera und dem Gesicht der Person zu bestimmen, und die erste Raumlage ferner unter Verwendung der Entfernung zwischen der Bildkamera und dem Gesicht der Person zu bestimmen. Dadurch wird der Vorteil erreicht, dass eine Skalierung des Gesichtsbildes bei der perspektivischen Verzerrung effizient durchgeführt werden kann.

Die Raumlagebestimmungseinrichtung ist ausgebildet, ein Augenpaar der Person in dem Gesichtsbild zu erfassen, einen Augenpaarabstand des Augenpaares der Person in dem Gesichtsbild zu bestimmen, und die erste Entfernung zwischen der Bildkamera und dem Gesicht der Person auf der Basis des Augenpaarabstandes in dem Gesichtsbild zu bestimmen. Dadurch wird der Vorteil erreicht, dass die Entfernung effizient bestimmt werden kann.

Die Raumlagebestimmungseinrichtung kann den Augenpaarabstand in dem Gesichtsbild beispielsweise mit einem vorbestimmten Referenzaugenpaarabstand vergleichen, und somit die Entfernung bestimmen. Der Referenzaugenpaarabstand kann beispielsweise einen Wert zwischen 60mm und 65mm annehmen.

Gemäß einem Beispiel ist die Raumlagebestimmungseinrichtung ausgebildet, einen Bildschärfeindikator von der Bildkamera zu empfangen, wobei der Bildschärfeindikator eine Bildschärfe des Gesichtsbildes repräsentiert, und die Entfernung zwischen der Bildkamera und dem Gesicht der Person auf der Basis des Bildschärfeindikators zu bestimmen. Dadurch wird der Vorteil erreicht, dass Informationen über einen Fokusbereich bzw. eine Fokalebene der Bildkamera zur Bestimmung der Entfernung ausgewertet werden können.

Gemäß einem Beispiel ist die Raumlagebestimmungseinrichtung ausgebildet, einen Lichtstrahl in Richtung des Gesichts der Person auszusenden, einen reflektierten Lichtstrahl von dem Gesicht der Person zu empfangen, und die Entfernung zwischen der Bildkamera und dem Gesicht der Person auf der Basis des Lichtstrahls und des reflektierten Lichtstrahls zu bestimmen. Dadurch wird der Vorteil erreicht, dass die Entfernung effizient bestimmt werden kann.

Die Raumlagebestimmungseinrichtung kann hierfür ein Distometer umfassen oder ein Distometer bilden. Der Lichtstrahl und der reflektierte Lichtstrahl können ein Laserlichtstrahl bzw. ein reflektierter Laserlichtstrahl sein.

Die Raumlagebestimmungseinrichtung ist ausgebildet, eine drei-dimensionale Gesichtsform des Gesichts der Person zu bestimmen, und die erste Raumlage ferner unter Verwendung der drei-dimensionalen Gesichtsform des Gesichts der Person zu bestimmen. Dadurch wird der Vorteil erreicht, dass die erste Raumlage effizient bestimmt werden kann.

Die Raumlagebestimmungseinrichtung ist ausgebildet, die drei-dimensionale Gesichtsform des Gesichts der Person mit der vorbestimmten drei-dimensionalen Referenzgesichtsform zu vergleichen, und die erste Raumlage auf der Basis des Vergleichs der drei-dimensionalen Gesichtsform des Gesichts der Person mit der vorbestimmten drei-dimensionalen Referenzgesichtsform zu bestimmen. Dadurch wird der Vorteil erreicht, dass die erste Raumlage effizient bestimmt werden kann.

Die Raumlagebestimmungseinrichtung ist hierfür ausgebildet, Charakteristiken der drei-dimensionalen Gesichtsform und der drei-dimensionalen Referenzgesichtsform miteinander zu vergleichen. Dabei können beispielsweise eine Lage der Augen, der Nase oder der Ohren und/oder eine Form der Wangen, der Schläfen oder der Stirn berücksichtigt werden.

Gemäß einem Beispiel umfasst die Vorrichtung eine weitere Bildkamera, wobei die weitere Bildkamera ausgebildet ist, ein weiteres Bild des Gesichts der Person zu erfassen, um ein weiteres Gesichtsbild zu erhalten, und wobei die Raumlagebestimmungseinrichtung ausgebildet ist, die Gesichtsform des Gesichts der Person auf der Basis des Gesichtsbildes und des weiteren Gesichtsbildes zu bestimmen. Dadurch wird der Vorteil erreicht, dass die Gesichtsform effizient bestimmt werden kann.

Die Raumlagebestimmungseinrichtung kann hierfür eine Stereokamera umfassen oder eine Stereokamera bilden. Die Bildkamera und die weitere Bildkamera können ortsfest angeordnet sein. Die Raumlagebestimmungseinrichtung kann dabei die unterschiedlichen Perspektiven der Bildkamera und der weiteren Bildkamera bei der Erfassung des Gesichtsbildes bzw. des weiteren Gesichtsbildes relativ zu dem Gesicht der Person berücksichtigen.

Gemäß einem Beispiel ist die Raumlagebestimmungseinrichtung ausgebildet, ein Lichtmuster in Richtung des Gesichts der Person auszusenden, ein reflektiertes Lichtmuster von dem Gesicht der Person zu empfangen, und die Gesichtsform des Gesichts der Person auf der Basis des Lichtmusters und des reflektierten Lichtmusters zu bestimmen. Dadurch wird der Vorteil erreicht, dass die Gesichtsform effizient bestimmt werden kann.

Die Raumlagebestimmungseinrichtung kann hierfür eine Time-of-Flight (TOF) Kamera umfassen oder eine Time-of-Flight (TOF) Kamera bilden. Das Lichtmuster kann eine vorbestimmte räumliche Struktur aufweisen, wobei die Raumlagebestimmungseinrichtung eine räumliche Struktur des reflektierten Lichtmusters mit der vorbestimmten räumlichen Struktur des ausgesendeten Lichtmusters vergleichen kann. Insbesondere können hierbei Lichtlaufzeiten bzw. Lichtlaufzeitunterschiede erfasst und verarbeitet werden.

Gemäß einem Beispiel umfasst das Lichtmuster und das reflektierte Lichtmuster Licht aus einem vorbestimmten Wellenlängenbereich, insbesondere aus einem Nahinfrarot (NIR) Wellenlängenbereich. Dadurch wird der Vorteil erreicht, dass unsichtbares Licht bei der Bestimmung der Gesichtsform verwendet werden kann. Das Lichtmuster und das reflektierte Lichtmuster können ausschließlich Licht aus dem vorbestimmten Wellenlängenbereich, insbesondere dem Nahinfrarot (NIR) Wellenlängenbereich, umfassen.

Gemäß einer Ausführungsform ist der Prozessor ausgebildet, eine Charakteristik der Person, insbesondere ein Alter der Person, ein Geschlecht der Person, eine Masse der Person oder einen Body-Mass-Index der Person, auf der Basis des Gesichtsbildes der Person zu bestimmen, und das vorbestimmte Referenzgesichtsmodell aus einer Mehrzahl von vorbestimmten Referenzgesichtsmodellen auf der Basis der Charakteristik der Person auszuwählen. Dadurch wird der Vorteil erreicht, dass das verwendete Referenzgesichtsmodell personenspezifisch ausgewählt werden kann.

Gemäß einer Ausführungsform ist der Prozessor ausgebildet, das Gesicht der Person in dem korrigierten Gesichtsbild zu erfassen, einen Bildhintergrund in dem korrigierten Gesichtsbild zu bestimmen, wobei der Bildhintergrund das Gesicht der Person nicht umfasst, und den Bildhintergrund aus dem korrigierten Gesichtsbild zu entfernen. Dadurch wird der Vorteil erreicht, dass das korrigierte Gesichtsbild in einer standardisierten Weise, d.h. unabhängig von dem Hintergrund bei der Erfassung des Gesichtsbildes, bereitgestellt werden kann.

Gemäß einer Ausführungsform umfasst die Vorrichtung eine Kommunikationsschnittstelle, welche ausgebildet ist, eine Kommunikationsverbindung zu einem Server über ein Kommunikationsnetzwerk aufzubauen, und das korrigierte Gesichtsbild über die Kommunikationsverbindung an den Server zu übertragen. Dadurch wird der Vorteil erreicht, dass eine Mehrzahl von Gesichtsbilder einer Mehrzahl von Personen zentral durch den Server gespeichert und weiterverarbeitet werden können.

Die Kommunikationsverbindung kann eine authentifizierte Kommunikationsverbindung sein. Beim Aufbau der Kommunikationsverbindung kann sich die Vorrichtung hierfür gegenüber dem Server authentifizieren. Ferner kann sich der Server hierfür beim Aufbau der Kommunikationsverbindung gegenüber der Vorrichtung authentifizieren. Die authentifizierte Kommunikationsverbindung kann mittels einer Transportverschlüsselung gesichert sein.

Die erste Raumlage und die zweite Raumlage sind durch zumindest einen der folgenden Raumlageparameter definiert: eine erste bzw. zweite Entfernung zwischen der Bildkamera und dem Gesicht der Person, einen ersten bzw. zweiten Azimutwinkel der Bildkamera relativ zu dem Gesicht der Person, einen ersten bzw. zweiten Elevationswinkel der Bildkamera relativ zu dem Gesicht der Person, eine erste bzw. zweite Ausrichtung der Bildkamera, eine erste bzw. zweite Ausrichtung des Gesichts der Person. Dadurch wird der Vorteil erreicht, dass die jeweilige Entfernung sowie die jeweilige Perspektive relativ zu dem Gesicht der Person eindeutig festgelegt sein können.

Gemäß einer Ausführungsform ist der Prozessor ausgebildet, das korrigierte Gesichtsbild gemäß dem Standard ISO/IEC 19794-5 oder gemäß dem Standard ISO/IEC 39794-5 bereitzustellen. Dadurch wird der Vorteil erreicht, dass das korrigierte Gesichtsbild unmittelbar für ein Identifikationsdokument verwendet werden kann.

Gemäß einer Ausführungsform ist die Vorrichtung ein Smartphone, ein Fotokiosk oder ein Selbstbedienungsterminal. Dadurch wird der Vorteil erreicht, dass auf etablierte bzw. weit verbreitete Architekturen zur Implementierung der Vorrichtung zurückgegriffen werden kann.

Gemäß einem zweiten Aspekt betrifft die Erfindung ein Verfahren zum Korrigieren eines Gesichtsbildes einer Person gemäß Anspruch 4.

Das Verfahren kann durch die in Anspruch 4 definierte Vorrichtung ausgeführt werden. Weitere Merkmale des Verfahrens resultieren unmittelbar aus den Merkmalen und/oder der Funktionalität der Vorrichtung.

Gemäß einem dritten Aspekt betrifft die Erfindung ein Computerprogramm mit einem Programmcode zum Ausführen des Verfahrens gemäß dem zweiten Aspekt der Erfindung. Die Vorrichtung kann programmtechnisch eingerichtet sein, um das Computerprogramm auszuführen. Das Computerprogramm kann beispielsweise in Form einer App auf einem Smartphone realisiert werden.

Die Erfindung kann in Hardware und/oder Software realisiert werden.

Weitere Ausführungsbeispiele werden Bezug nehmend auf die beiliegenden Zeichnungen näher erläutert. Es zeigen:
Fig. 1 ein schematisches Diagramm einer Vorrichtung zum Korrigieren eines Gesichtsbildes einer Person;
Fig. 2 ein schematisches Diagramm eines Verfahrens zum Korrigieren eines Gesichtsbildes einer Person; und
Fig. 3 ein schematisches Diagramm einer Korrektur eines Gesichtsbildes.

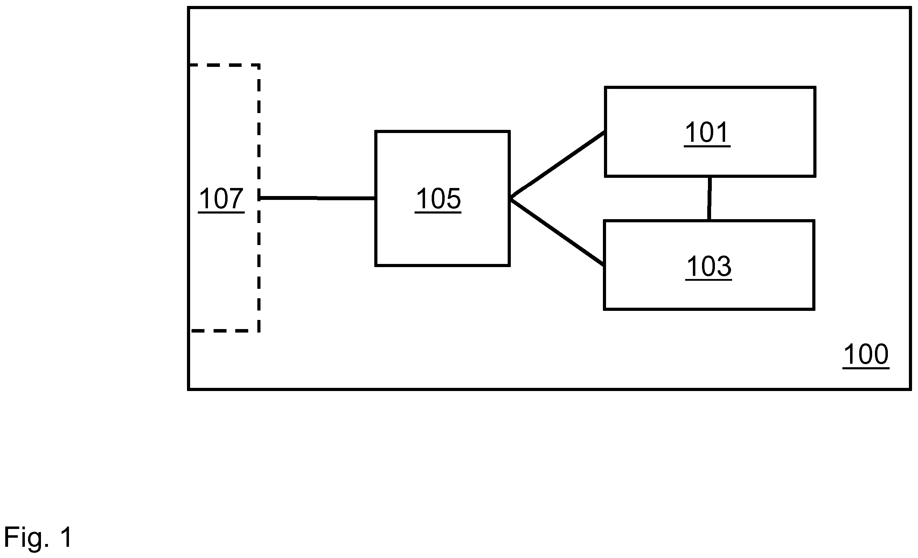

Fig. 1 zeigt ein schematisches Diagramm einer Vorrichtung 100 zum Korrigieren eines Gesichtsbildes einer Person. Die Vorrichtung 100 umfasst eine Bildkamera 101, welche ausgebildet ist, ein Bild eines Gesichts der Person zu erfassen, um das Gesichtsbild zu erhalten, wobei die Bildkamera 101 in einer ersten Raumlage relativ zu dem Gesicht der Person angeordnet ist. Die Vorrichtung 100 umfasst ferner eine Raumlagebestimmungseinrichtung 103, welche ausgebildet ist, die erste Raumlage unter Verwendung eines vorbestimmten Referenzgesichtsmodells zu bestimmen, wobei das vorbestimmte Referenzgesichtsmodell eine vorbestimmte Referenzgesichtsform repräsentiert. Die Vorrichtung 100 umfasst zudem einen Prozessor 105, welcher ausgebildet ist, eine Raumlageabweichung einer zweiten Raumlage von der ersten Raumlage zu bestimmen, und das Gesichtsbild auf der Basis der Raumlageabweichung zwischen der zweiten Raumlage und der ersten Raumlage perspektivisch zu verzerren, um ein korrigiertes Gesichtsbild der Person zu erhalten. Die Vorrichtung 100 kann ferner eine Kommunikationsschnittstelle 107 umfassen, welche ausgebildet ist, eine Kommunikationsverbindung zu einem Server über ein Kommunikationsnetzwerk aufzubauen, und das korrigierte Gesichtsbild über die Kommunikationsverbindung an den Server zu übertragen.

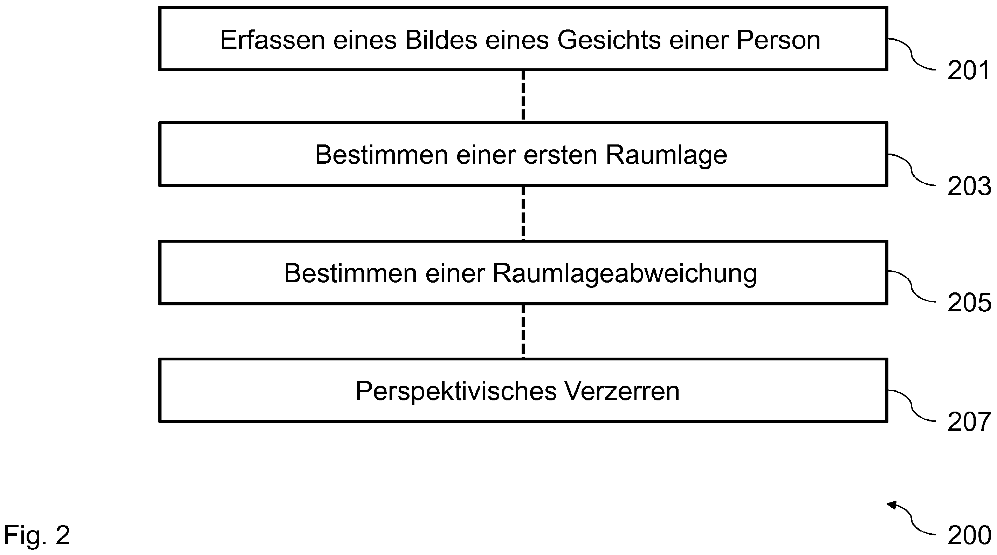

Fig. 2 zeigt ein schematisches Diagramm eines Verfahrens 200 zum Korrigieren eines Gesichtsbildes einer Person unter Verwendung einer Vorrichtung, wobei die Vorrichtung eine Bildkamera, eine Raumlagebestimmungseinrichtung, und einen Prozessor umfasst. Die Bildkamera ist in einer ersten Raumlage relativ zu einem Gesicht der Person angeordnet. Das Verfahren 200 umfasst ein Erfassen 201 eines Bildes des Gesichts der Person durch die Bildkamera, um das Gesichtsbild zu erhalten, ein Bestimmen 203 der ersten Raumlage unter Verwendung eines vorbestimmten Referenzgesichtsmodells durch die Raumlagebestimmungseinrichtung, wobei das vorbestimmte Referenzgesichtsmodell eine vorbestimmte Referenzgesichtsform repräsentiert, ein Bestimmen 205 einer Raumlageabweichung einer zweiten Raumlage von der ersten Raumlage durch den Prozessor, und ein perspektivisches Verzerren 207 des Gesichtsbildes auf der Basis der Raumlageabweichung zwischen der zweiten Raumlage und der ersten Raumlage durch den Prozessor, um ein korrigiertes Gesichtsbild der Person zu erhalten.

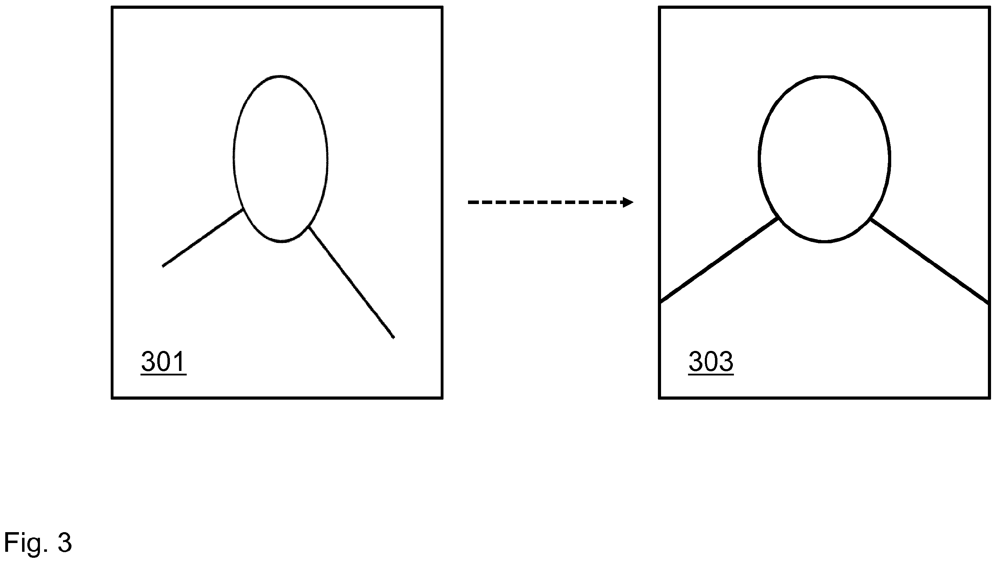

Fig. 3 zeigt ein schematisches Diagramm einer Korrektur eines Gesichtsbildes 301, welches aus einer ersten Raumlage einer Bildkamera relativ zu einem Gesicht einer Person erfasst worden ist. Die erste Raumlage ist durch eine erste Entfernung zwischen der Bildkamera und dem Gesicht der Person, einen ersten Azimutwinkel der Bildkamera relativ zu dem Gesicht der Person, einen ersten Elevationswinkel der Bildkamera relativ zu dem Gesicht der Person, eine erste Ausrichtung der Bildkamera, und eine erste Ausrichtung des Gesichts der Person definiert. Die erste Raumlage wird mittels einer Raumlagebestimmungseinrichtung bestimmt, welche hierfür beispielsweise eine Gesichtsform des Gesichtes bestimmen und mit einer vorbestimmten Referenzgesichtsform vergleichen kann.

Anschließend wird eine Raumlageabweichung zwischen einer zweiten Raumlage und der ersten Raumlage bestimmt und das Gesichtsbild 301 mittels eines Prozessors derart perspektivisch verzerrt, dass ein korrigiertes Gesichtsbild 303 bereitgestellt wird, welches der zweiten Raumlage entspricht. Die zweite Raumlage ist durch eine zweite Entfernung zwischen der Bildkamera und dem Gesicht der Person, einen zweiten Azimutwinkel der Bildkamera relativ zu dem Gesicht der Person, einen zweiten Elevationswinkel der Bildkamera relativ zu dem Gesicht der Person, eine zweite Ausrichtung der Bildkamera, und eine zweite Ausrichtung des Gesichts der Person definiert. Die zweite Raumlage kann vorbestimmt sein und beispielsweise dem Standard ISO/IEC 19794-5 entnommen sein.

Das Konzept erlaubt folglich die Bereitstellung eines perspektivisch bzw. geometrisch korrigierten Gesichtsbildes 303, welches beispielsweise als Referenz für Anwendungen im Bereich der Gesichtsbiometrie eingesetzt werden kann. Das Gesicht der Person kann folglich aus einer beliebigen Entfernung, beispielsweise einer Armlänge, sowie einer beliebigen Perspektive erfasst werden, um das Gesichtsbild 301 zu erhalten. Das erfasste Gesichtsbild 301 kann anschließend derart korrigiert bzw. harmonisiert werden, dass der Eindruck entsteht, dass das Gesicht von einer frei wählbaren, optimalen Entfernung, beispielsweise zwischen 1,2m und 2,5m, bevorzugt 1,5m, sowie einer frei wählbaren, optimalen Perspektive aufgenommen wurde, ohne hierbei die Auflösung der Details des Gesichtes zu beeinträchtigen. Die Korrektur kann die Auflösung des korrigierten Gesichtsbildes 303 reduzieren; diese Reduktion kann jedoch vorab durch eine erhöhte Auflösung bei der Erfassung des Gesichtsbildes 301 kompensiert werden.

Die Kompensation der durch die perspektivische Verzerrung verursachten Verringerung der Auflösung kann folglich durch eine von vornherein höher auflösende optische Bildkamera erreicht werden, als für eine unmodifizierte Aufnahme typischerweise verwendet werden würde. Der Standard ISO/IEC 39794-5 fordert beispielsweise 90 Pixel zwischen den Augen der Person und empfiehlt 120 Pixel, wobei Strukturen im Gesicht der Person klar erkennbar bleiben sollen, sofern diese mindestens 1mm groß sind. Hierbei sollte insbesondere darauf geachtet werden, dass kleine Details des Gesichts der Person nicht verloren gehen. Trägt ein Pixel etwa eine Information über eine Hautfalte der Person und wird dieser Pixel bei der perspektivischen Verzerrung entfernt, so verschwindet möglicherweise die Hautfalte. Es sollte folglich dafür gesorgt werden, dass die initiale Auflösung des Gesichtsbildes 301 über der final geforderten Auflösung des korrigierten Gesichtsbildes 303 liegt, beispielsweise um einen Faktor zwischen 2 und 3. Um die perspektivische Verzerrung des Gesichtsbildes 301 durchführen zu können, ist es vorteilhaft, die tatsächliche räumliche Struktur bzw. Gesichtsform des Gesichtes und die Entfernung des Gesichtes von der Bildkamera möglichst genau zu kennen.

Dabei ist es beispielsweise möglich, die Entfernung zu schätzen, etwa anhand der räumlichen Gegebenheiten in einer Fotokabine oder bei Selbstportraits anhand einer durchschnittlichen typischen Armlänge von Personen. Die räumliche Struktur bzw. die Gesichtsform kann beispielsweise anhand eines vorbestimmten, generischen Gesichtsmodells geschätzt werden.

Die Entfernung zwischen dem Gesicht der Person und der Bildkamera kann ferner anhand eines Augenpaarabstandes im Gesichtsbild 301 geschätzt werden, welcher mit einem Referenzaugenpaarabstand, beispielsweise zwischen 60mm und 65mm, verglichen werden kann. Ferner kann die Entfernung mittels eines Distometers bzw. eines Laser-Entfernungsmessers bestimmt werden, wobei jedoch Vorsorge dahingehend zu treffen ist, dass das Licht bzw. Laserlicht nicht in ein Auge der Person gerichtet wird. Beispielsweise kann das Licht bzw. Laserlicht auf die Stirn der Person gerichtet sein. Die Entfernung kann ferner anhand eines Bildschärfeindikators der Bildkamera bzw. deren Focus-Einstellung bei der Erfassung des Gesichtsbildes 301 bestimmt werden. Die Entfernung kann zudem mittels einer Time-of-Flight (TOF) Kamera bestimmt werden, wobei gleichzeitig die Gesichtsform des Gesichtes bestimmt werden kann. Zudem kann die Entfernung anhand zweier aus unterschiedlichen Entfernungen erfasster Gesichtsbilder bestimmt werden. Hierfür kann beispielsweise die Bilderfassungsvorrichtung gemäß DE 10 2015 106 358 A1 eingesetzt werden, wobei gleichzeitig die Gesichtsform des Gesichtes bestimmt werden kann.

Die Geometrie bzw. Gesichtsform des Gesichtes der Person kann mit einer Mehrzahl von Referenzgesichtsmodellen bzw. Gesichtsprototypen verglichen bzw. angenähert werden, wobei ein zu verwendendes, passendes Referenzgesichtsmodell beispielsweise nach Alter, nach Geschlecht, nach ethnischer Herkunft und/oder nach Body-Mass-Index der Person ausgewählt werden kann. Zur Bestimmung derartiger Charakteristiken der Person können beispielsweise etablierte Ansätze aus dem Bereich der Gesichtserkennung eingesetzt werden. Die Gesichtsform kann ferner, wie bereits zuvor erläutert, mittels einer Time-of-Flight (TOF) Kamera bestimmt werden. Die Gesichtsform kann insbesondere durch Aussenden bzw. Projektion sowie Empfang von strukturiertem Licht, beispielsweise aus dem Nahinfrarot (NIR) Wellenlängenbereich, bestimmt werden. Zudem kann die Gesichtsform anhand zweier gleichzeitig aus unterschiedlichen Entfernungen erfasster Gesichtsbilder bestimmt werden.

Durch Kenntnis der Entfernung sowie der Gesichtsform bzw. Gesichtsgeometrie, können die Pixel des ursprünglich erfassten Gesichtsbildes 301 derart umgeordnet werden, dass deren Lage im korrigierten Gesichtsbild 303 einer Betrachtung des Gesichts in der optimalen, frei wählbaren zweiten Raumlage entspricht. Dabei können beispielsweise die Nase der Person verkleinert, die umgebenden Regionen ein wenig vergrößert, und die Gesichtsränder, Wangen und Ohren der Person deutlich vergrößert werden. Die perspektivische Verzerrung des Gesichtsbildes 301 kann beispielsweise mittels einer drei-dimensionalen Bildtransformation bzw. Koordinatentransformation durchgeführt werden. Zur Bestimmung der ersten Raumlage können folglich die drei-dimensionale Gesichtsform des Gesichtes sowie eine drei-dimensionale Referenzgesichtsform verwendet werden.

Möglicherweise können Informationen über die Ohren der Person, welche aufgrund einer Verdeckung durch andere Teile des Gesichtes bei kurzen Abständen nicht sichtbar sind, bei der perspektivischen Verzerrung verloren gehen. Jedoch verwenden typische Ansätze zur Gesichtserkennung überwiegend Referenzdaten aus einer rechteckförmigen Region des Gesichtes, welche durch die Augen und den Mund der Person begrenzt wird. Folglich kann die Leistungsfähigkeit typischer Ansätze zur Gesichtserkennung aufrecht erhalten bleiben.

Das Konzept ermöglicht somit eine Bereitstellung eines entfernungs-harmonisierten, korrigierten Gesichtsbildes 303, wobei das Gesichtsbild 301 innerhalb eines breiten Bereiches möglicher, und insbesondere kurzer Entfernungen erfasst werden kann. Das Konzept kann beispielsweise bei der Erfassung eines Gesichtsbildes 301 in einem Selbstbedienungsterminal oder einem Fotokiosk eingesetzt werden. Dabei können unterschiedliche, auch sehr kurze Entfernungen bei der Erfassung des Gesichtsbildes 301 kompensiert werden.

Bei einer beispielhaften Anwendung in einem Selbstbedienungsterminal zur Passbeantragung in einem Einwohnermeldeamt bzw. Bürgerbüro ist beispielsweise vorbekannt, dass sich die Person etwa eine Armlänge entfernt von der Bildkamera befindet. Eine genaue Entfernung kann beispielsweise durch eine Kombination aus einer Bestimmung des Augenpaarabstandes im Gesichtsbild 301 und/oder auf Basis eines Bildschärfeindikators bzw. von Entfernungsdaten der scharf gestellten Bildkamera bestimmt werden. Die Gesichtsform bzw. Gesichtsgeometrie kann mittels strukturiertem NIR-Licht ermittelt werden. Für den Empfang des NIR-Lichts kann temporär ein entsprechendes schmalbandiges Filter vor die Bildkamera eingebracht, beispielsweise eingeklappt, werden. Unter Verwendung der bestimmten, drei-dimensionalen Gesichtsform kann das erfasste Gesichtsbild 301 daraufhin in hoher Auflösung auf eine scheinbare Entfernung von 150cm sowie eine gewünschte Perspektive, beispielsweise eine Frontalperspektive, harmonisiert werden.

Alle in Verbindung mit einzelnen Ausführungsformen beschriebenen oder gezeigten Merkmale können in beliebiger Kombination in dem erfindungsgemäßen Gegenstand vorgesehen sein, um gleichzeitig deren vorteilhafte Wirkungen zu realisieren.

### BEZUGSZEICHENLISTE

- 100: Vorrichtung
- 101: Bildkamera
- 103: Raumlagebestimmungseinrichtung
- 105: Prozessor
- 107: Kommunikationsschnittstelle

- 200: Verfahren zum Korrigieren eines Gesichtsbildes einer Person
- 201: Erfassen eines Bildes eines Gesichts einer Person
- 203: Bestimmen einer ersten Raumlage
- 205: Bestimmen einer Raumlageabweichung
- 207: Perspektivisches Verzerren

- 301: Gesichtsbild
- 303: Korrigiertes Gesichtsbild

## Patentansprüche

1. Vorrichtung (100) zum Korrigieren eines Gesichtsbildes (301) einer Person, mit:
einer Bildkamera (101), welche ausgebildet ist, ein Bild eines Gesichts der Person zu erfassen, um das Gesichtsbild (301) zu erhalten, wobei die Bildkamera (101) in einer ersten Raumlage relativ zu dem Gesicht der Person angeordnet ist;
einer Raumlagebestimmungseinrichtung (103), welche ausgebildet ist, die erste Raumlage unter Verwendung eines vorbestimmten Referenzgesichtsmodells zu bestimmen, wobei das vorbestimmte Referenzgesichtsmodell eine vorbestimmte drei-dimensionale Referenzgesichtsform repräsentiert; und
einem Prozessor (105), welcher ausgebildet ist, eine Raumlageabweichung einer zweiten Raumlage von der ersten Raumlage zu bestimmen, und das Gesichtsbild (301) auf der Basis der Raumlageabweichung zwischen der zweiten Raumlage und der ersten Raumlage perspektivisch zu verzerren, um ein korrigiertes Gesichtsbild (303) der Person zu erhalten, wobei die perspektivische Verzerrung des Gesichtsbildes mittels einer drei-dimensionalen Bildtransformation durchgeführt wird,
wobei das korrigierte Gesichtsbild (303) der zweiten Raumlage zugeordnet ist,
wobei die zweite Raumlage vorbestimmt ist,
wobei die erste Raumlage und die zweite Raumlage unterschiedlich sind,
**dadurch gekennzeichnet, dass** die erste Raumlage durch die folgenden Raumlageparameter definiert ist: eine erste Entfernung zwischen der Bildkamera (101) und dem Gesicht der Person, einen ersten Azimutwinkel der Bildkamera (101) relativ zu dem Gesicht der Person, einen ersten Elevationswinkel der Bildkamera (101) relativ zu dem Gesicht der Person, eine erste Ausrichtung der Bildkamera (101), eine erste Ausrichtung des Gesichts der Person, sodass die erste Entfernung und die dem ersten Azimutwinkel der Bildkamera (101), dem ersten Elevationswinkel der Bildkamera (101), der ersten Ausrichtung der Bildkamera (101) und der ersten Ausrichtung des Gesichts der Person entsprechende Perspektive relativ zu dem Gesicht der Person eindeutig festgelegt sind,
wobei die zweite Raumlage durch die folgenden Raumlageparameter definiert ist: eine zweite Entfernung zwischen der Bildkamera (101) und dem Gesicht der Person, einen zweiten Azimutwinkel der Bildkamera (101) relativ zu dem Gesicht der Person, einen zweiten Elevationswinkel der Bildkamera (101) relativ zu dem Gesicht der Person, eine zweite Ausrichtung der Bildkamera (101), eine zweite Ausrichtung des Gesichts der Person, sodass die zweite Entfernung und die dem zweiten Azimutwinkel der Bildkamera (101), dem zweiten Elevationswinkel der Bildkamera (101), der zweiten Ausrichtung der Bildkamera (101) und der zweiten Ausrichtung des Gesichts der Person entsprechende Perspektive relativ zu dem Gesicht der Person eindeutig festgelegt sind,
wobei die Raumlagebestimmungseinrichtung (103) ausgebildet ist, die erste Entfernung zwischen der Bildkamera (101) und dem Gesicht der Person zu bestimmen, und die erste Raumlage ferner unter Verwendung der ersten Entfernung zwischen der Bildkamera (101) und dem Gesicht der Person zu bestimmen,
wobei die Raumlagebestimmungseinrichtung (103) ausgebildet ist, ein Augenpaar der Person in dem Gesichtsbild (301) zu erfassen, einen Augenpaarabstand des Augenpaares der Person in dem Gesichtsbild (301) zu bestimmen, und die erste Entfernung zwischen der Bildkamera (101) und dem Gesicht der Person auf der Basis des Augenpaarabstandes in dem Gesichtsbild (301) zu bestimmen,
wobei die Raumlagebestimmungseinrichtung (103) ausgebildet ist, eine drei-dimensionale Gesichtsform des Gesichts der Person zu bestimmen, und die erste Raumlage ferner unter Verwendung der drei-dimensionalen Gesichtsform des Gesichts der Person zu bestimmen,
wobei die Raumlagebestimmungseinrichtung ausgebildet ist, die drei-dimensionale Gesichtsform des Gesichts der Person mit der vorbestimmten drei-dimensionalen Referenzgesichtsform zu vergleichen, und die erste Raumlage auf der Basis des Vergleichs der drei-dimensionalen Gesichtsform des Gesichts der Person mit der vorbestimmten drei-dimensionalen Referenzgesichtsform zu bestimmen, wobei die Raumlagebestimmungseinrichtung hierfür ausgebildet ist, Charakteristiken der drei-dimensionalen Gesichtsform und der drei-dimensionalen Referenzgesichtsform miteinander zu vergleichen.

2. Vorrichtung (100) nach Anspruch 1, wobei der Prozessor (105) ausgebildet ist, eine Charakteristik der Person, insbesondere ein Alter der Person, ein Geschlecht der Person, eine Masse der Person oder einen Body-Mass-Index der Person, auf der Basis des Gesichtsbildes (301) der Person zu bestimmen, und das vorbestimmte Referenzgesichtsmodell aus einer Mehrzahl von vorbestimmten Referenzgesichtsmodellen auf der Basis der Charakteristik der Person auszuwählen.

3. Vorrichtung (100) nach einem der vorstehenden Ansprüche, mit:
einer Kommunikationsschnittstelle (107), welche ausgebildet ist, eine Kommunikationsverbindung zu einem Server über ein Kommunikationsnetzwerk aufzubauen, und das korrigierte Gesichtsbild (303) über die Kommunikationsverbindung an den Server zu übertragen.

4. Verfahren (200) zum Korrigieren eines Gesichtsbildes (301) einer Person unter Verwendung einer Vorrichtung (100), wobei die Vorrichtung (100) eine Bildkamera (101), eine Raumlagebestimmungseinrichtung (103), und einen Prozessor (105) umfasst, wobei die Bildkamera (101) in einer ersten Raumlage relativ zu einem Gesicht der Person angeordnet ist, mit:
Erfassen (201) eines Bildes des Gesichts der Person durch die Bildkamera (101), um das Gesichtsbild (301) zu erhalten;
Bestimmen (203) der ersten Raumlage unter Verwendung eines vorbestimmten Referenzgesichtsmodells durch die Raumlagebestimmungseinrichtung (103), wobei das vorbestimmte Referenzgesichtsmodell eine vorbestimmte drei-dimensionale Referenzgesichtsform repräsentiert;
Bestimmen (205) einer Raumlageabweichung einer zweiten Raumlage von der ersten Raumlage durch den Prozessor (105); und
Perspektivisches Verzerren (207) des Gesichtsbildes (301) auf der Basis der Raumlageabweichung zwischen der zweiten Raumlage und der ersten Raumlage durch den Prozessor (105), um ein korrigiertes Gesichtsbild (303) der Person zu erhalten, wobei die perspektivische Verzerrung des Gesichtsbildes mittels einer drei-dimensionalen Bildtransformation durchgeführt wird
wobei das korrigierte Gesichtsbild (303) der zweiten Raumlage zugeordnet ist,
wobei die zweite Raumlage vorbestimmt ist,
wobei die erste Raumlage und die zweite Raumlage unterschiedlich sind,
**dadurch gekennzeichnet, dass** die erste Raumlage durch die folgenden Raumlageparameter definiert sind: eine erste Entfernung zwischen der Bildkamera (101) und dem Gesicht der Person, einen ersten Azimutwinkel der Bildkamera (101) relativ zu dem Gesicht der Person, einen ersten Elevationswinkel der Bildkamera (101) relativ zu dem Gesicht der Person, eine erste Ausrichtung der Bildkamera (101), eine erste Ausrichtung des Gesichts der Person, sodass die erste Entfernung und die dem ersten Azimutwinkel der Bildkamera (101), dem ersten Elevationswinkel der Bildkamera (101), der ersten Ausrichtung der Bildkamera (101) und der ersten Ausrichtung des Gesichts der Person entsprechende Perspektive relativ zu dem Gesicht der Person eindeutig festgelegt sind,
wobei die zweite Raumlage durch die folgenden Raumlageparameter definiert sind: eine zweite Entfernung zwischen der Bildkamera (101) und dem Gesicht der Person, einen zweiten Azimutwinkel der Bildkamera (101) relativ zu dem Gesicht der Person, einen zweiten Elevationswinkel der Bildkamera (101) relativ zu dem Gesicht der Person, eine zweite Ausrichtung der Bildkamera (101), eine zweite Ausrichtung des Gesichts der Person, sodass die zweite Entfernung und die dem zweiten Azimutwinkel der Bildkamera (101), dem zweiten Elevationswinkel der Bildkamera (101), der zweiten Ausrichtung der Bildkamera (101) und der zweiten Ausrichtung des Gesichts der Person entsprechende Perspektive relativ zu dem Gesicht der Person eindeutig festgelegt sind,
wobei durch die Raumlagebestimmungseinrichtung (103) die erste Entfernung zwischen der Bildkamera (101) und dem Gesicht der Person bestimmt wird und die erste Raumlage ferner unter Verwendung der ersten Entfernung zwischen der Bildkamera (101) und dem Gesicht der Person bestimmt wird,
wobei durch die Raumlagebestimmungseinrichtung (103) ein Augenpaar der Person in dem Gesichtsbild (301) erfasst wird, ein Augenpaarabstand des Augenpaares der Person in dem Gesichtsbild (301) bestimmt wird und die erste Entfernung zwischen der Bildkamera (101) und dem Gesicht der Person auf der Basis des Augenpaarabstandes in dem Gesichtsbild (301) bestimmt wird,
wobei durch die Raumlagebestimmungseinrichtung (103) eine drei-dimensionale Gesichtsform des Gesichts der Person bestimmt wird und die erste Raumlage ferner unter Verwendung der drei-dimensionalen Gesichtsform des Gesichts der Person bestimmt wird, wobei durch die Raumlagebestimmungseinrichtung die drei-dimensionale Gesichtsform des Gesichts der Person mit der vorbestimmten drei-dimensionalen Referenzgesichtsform verglichen wird und die erste Raumlage auf der Basis des Vergleichs der drei-dimensionalen Gesichtsform des Gesichts der Person mit der vorbestimmten drei-dimensionalen Referenzgesichtsform bestimmt wird, wobei durch die Raumlagebestimmungseinrichtung hierfür Charakteristiken der drei-dimensionale Gesichtsform und der drei-dimensionalen Referenzgesichtsform miteinander verglichen werden.

5. Computerprogramm mit einem Programmcode zum Ausführen des Verfahrens (200) nach Anspruch 4, wenn das Verfahren (200) durch die Vorrichtung (100) nach einem der Ansprüche 1 bis 3 ausgeführt wird, wobei die Vorrichtung (100) programmtechnisch eingerichtet ist, um das Computerprogramm auszuführen.

## Claims

1. A device (100) for correcting a facial image (301) of a person, comprising:
an image camera (101), which is configured to capture an image of a face of the person in order to obtain the facial image (301), wherein the image camera (101) is arranged in a first spatial position relative to the face of the person;
a spatial position determination device (103), which is configured to determine the first spatial position using a predetermined reference face model, wherein the predetermined reference face model represents a predetermined three-dimensional reference face shape; and
a processor (105), which is configured to determine a spatial position deviation of a second spatial position from the first spatial position, and to perspectively distort the facial image (301) based on the spatial position deviation between the second spatial position and the first spatial position in order to obtain a corrected facial image (303) of the person, wherein the perspective distortion of the facial image is carried out by means of a three-dimensional image transformation,
where the corrected facial image (303) is assigned to the second spatial position,
where the second spatial position is predetermined,
where the first spatial position and the second spatial position are different,
**characterized in that** the first spatial position is defined by the following spatial position parameters: a first distance between the image camera (101) and the face of the person, a first azimuth angle of the image camera (101) relative to the face of the person, a first elevation angle of the image camera (101) relative to the face of the person, a first orientation of the image camera (101), a first orientation of the face of the person, such that the first distance and the perspective corresponding to the first azimuth angle of the image camera (101), the first elevation angle of the image camera (101), the first orientation of the image camera (101) and the first orientation of the face of the person are uniquely determined,
wherein the second spatial position is defined by the following spatial position parameters: a second distance between the image camera (101) and the face of the person, a second azimuth angle of the image camera (101) relative to the face of the person, a second elevation angle of the image camera (101) relative to the face of the person, a second orientation of the image camera (101), a second orientation of the face of the person, such that the second distance and the perspective corresponding to the second azimuth angle of the image camera (101), the second elevation angle of the image camera (101), the second orientation of the image camera (101) and the second orientation of the face of the person are uniquely determined,
wherein the spatial position determination device (103) is configured to determine the first distance between the image camera (101) and the face of the person, and to determine the first spatial position further by using the first distance between the image camera (101) and the face of the person,
wherein the spatial position determination device (103) is configured to detect a pair of eyes of the person in the facial image (301), to determine an eye-pair distance of the pair of eyes of the person in the facial image (301), and to determine the first distance between the image camera (101) and the face of the person on the basis of the eye-pair distance in the facial image (301),
wherein the spatial position determination device (103) is configured to determine a three-dimensional facial shape of the face of the person, and to determine the first spatial position further by using the three-dimensional facial shape of the face of the person,
wherein the spatial position determination device is configured to compare the three-dimensional facial shape of the face of the person with the predetermined three-dimensional reference facial shape, and to determine the first spatial position on the basis of comparing the three-dimensional facial shape of the face of the person with the predetermined three-dimensional reference facial shape, wherein for this, the spatial position determination device is configured to compare characteristics of the three-dimensional facial shape and the three-dimensional reference facial shape.

2. The device (100) according to claim 1, wherein the processor (105) is configured to determine a characteristic of the person, in particular an age of the person, a gender of the person, a mass of the person or a body mass index of the person, on the basis of the facial image (301) of the person, and to select the predetermined reference face model from a plurality of predetermined reference face models on the basis of the characteristic of the person.

3. The device (100) according to one of the preceding claims, comprising:
a communication interface (107), which is configured to establish a communication connection to a server via a communication network and to transmit the corrected facial image (303) to the server via the communication connection.

4. A method (200) for correcting a facial image (301) of a person using a device (100), wherein the device (100) comprises an image camera (101), a spatial position determination device (103), and a processor (105), wherein the image camera (101) is arranged in a first spatial position relative to a face of the person, the method (200) comprising:
capturing (201) an image of the face of the person by the image camera (101) in order to obtain the facial image (301);
determining (203) the first spatial position using a predetermined reference face model by the spatial position determination device (103), wherein the predetermined reference face model represents a predetermined three-dimensional reference face shape;
determining (205) a spatial position deviation of a second spatial position from the first spatial position by the processor (105); and
perspectively distorting (207) the facial image (301) based on the spatial position deviation between the second spatial position and the first spatial position by the processor (105) in order to obtain a corrected facial image (303) of the person, wherein the perspectively distorting of the facial image is carried out by means of a three-dimensional image transformation,
where the corrected facial image (303) is assigned to the second spatial position,
where the second spatial position is predetermined,
where the first spatial position and the second spatial position are different,
**characterized in that** the first spatial position is defined by the following spatial position parameters: a first distance between the image camera (101) and the face of the person, a first azimuth angle of the image camera (101) relative to the face of the person, a first elevation angle of the image camera (101) relative to the face of the person, a first orientation of the image camera (101), a first orientation of the face of the person, such that the first distance and the perspective corresponding to the first azimuth angle of the image camera (101), the first elevation angle of the image camera (101), the first orientation of the image camera (101) and the first orientation of the face of the person are uniquely determined,
wherein the second spatial position is defined by the following spatial position parameters: a second distance between the image camera (101) and the face of the person, a second azimuth angle of the image camera (101) relative to the face of the person, a second elevation angle of the image camera (101) relative to the face of the person, a second orientation of the image camera (101), a second orientation of the face of the person, such that the second distance and the perspective corresponding to the second azimuth angle of the image camera (101), the second elevation angle of the image camera (101), the second orientation of the image camera (101) and the second orientation of the face of the person are uniquely determined,
wherein, by the spatial position determination device (103), the first distance between the image camera (101) and the face of the person is determined and the first spatial position is further determined using the first distance between the image camera (101) and the face of the person,
wherein, by the spatial position determination device (103), a pair of eyes of the person in the facial image (301) is detected, an eye-pair distance of the pair of eyes of the person in the facial image (301) is determined, and the first distance between the image camera (101) and the face of the person based on the eye-pair distance is determined in the facial image (301),
wherein, by the spatial position determination device (103), a three-dimensional facial shape of the face of the person is determined and the first spatial position is further determined using the three-dimensional facial shape of the face of the person,
wherein, by the spatial position determination device, the three-dimensional facial shape of the face of the person is compared with the predetermined three-dimensional reference facial shape and the first spatial position is determined based on the comparison of the three-dimensional facial shape of the face of the person with the predetermined three-dimensional reference facial shape, wherein, by the spatial position determination device, characteristics of the three-dimensional facial shape and the three-dimensional reference facial shape are compared for this.

5. A computer program comprising program code for executing the method (200) according to claim 4, when the method (200) is executed by the device (100) according to any one of claims 1 to 3, wherein the device (100) is programmably configured to execute the computer program.

## Revendications

1. Un dispositif (100) pour corriger l'image faciale (301) d'une personne, comprenant :
une caméra d'image (101), configurée pour capturer une image du visage de la personne afin d'obtenir l'image faciale (301), dans laquelle la caméra d'image (101) est disposée dans une première position spatiale par rapport au visage de la personne ;
un dispositif de détermination de position spatiale (103), configuré pour déterminer la première position spatiale à l'aide d'un modèle de visage de référence prédéterminé, lequel modèle de visage de référence prédéterminé représente une forme de visage de référence tridimensionnelle prédéterminée ; et
un processeur (105), configuré pour déterminer un écart de position spatiale d'une seconde position spatiale par rapport à la première position spatiale, et pour déformer perspectivement l'image faciale (301) en fonction de l'écart de position spatiale entre la seconde position spatiale et la première position spatiale afin d'obtenir une image faciale corrigée (303) de la personne, la distorsion perspective de l'image faciale étant réalisée au moyen d'une transformation d'image tridimensionnelle,
où l'image faciale corrigée (303) est attribuée à la deuxième position spatiale,
où la seconde position spatiale est prédéterminée,
où la première position spatiale et la deuxième position spatiale sont différentes,
**caractérisée en ce que** la première position spatiale est définie par les paramètres de position spatiale suivants : une première distance entre la caméra d'image (101) et le visage de la personne, un premier angle d'azimut de la caméra d'image (101) par rapport au visage de la personne, un premier angle d'élévation de la caméra d'image (101) par rapport au visage de la personne, une première orientation de la caméra d'image (101), une première orientation du visage de la personne, de sorte que la première distance et la perspective correspondant au premier angle d'azimut de la caméra d'image (101), au premier angle d'élévation de la caméra d'image (101), à la première orientation de la caméra d'image (101) et à la première orientation du visage de la personne sont déterminées de manière unique, dans lequel la seconde position spatiale est définie par les paramètres de position spatiale suivants : une seconde distance entre la caméra d'image (101) et le visage de la personne, un second angle d'azimut de la caméra d'image (101) par rapport au visage de la personne, un second angle d'élévation de la caméra d'image (101) par rapport au visage de la personne, une seconde orientation de la caméra d'image (101), une seconde orientation du visage de la personne, de sorte que la seconde distance et la perspective correspondant au second angle d'azimut de la caméra d'image (101), au second angle d'élévation de la caméra d'image (101), à la seconde orientation de la caméra d'image (101) et à la seconde orientation du visage de la personne soient déterminées de manière unique,
dans lequel le dispositif de détermination de position spatiale (103) est configuré pour déterminer la première distance entre la caméra d'image (101) et le visage de la personne, et pour déterminer en outre la première position spatiale en utilisant la première distance entre la caméra d'image (101) et le visage de la personne,
dans lequel le dispositif de détermination de position spatiale (103) est configuré pour détecter une paire d'yeux de la personne dans l'image faciale (301), pour déterminer la distance entre les yeux de la personne dans l'image faciale (301), et pour déterminer la première distance entre la caméra d'image (101) et le visage de la personne sur la base de la distance entre les yeux dans l'image faciale (301),
dans lequel le dispositif de détermination de position spatiale (103) est configuré pour déterminer une forme faciale tridimensionnelle du visage de la personne, et pour déterminer en outre la première position spatiale en utilisant la forme faciale tridimensionnelle du visage de la personne,
dans lequel le dispositif de détermination de la position spatiale est configuré pour comparer la forme faciale tridimensionnelle du visage de la personne avec la forme faciale tridimensionnelle de référence prédéterminée, et pour déterminer la première position spatiale sur la base de la comparaison de la forme faciale tridimensionnelle du visage de la personne avec la forme faciale tridimensionnelle de référence prédéterminée, dans lequel, à cette fin, le dispositif de détermination de la position spatiale est configuré pour comparer les caractéristiques de la forme faciale tridimensionnelle et de la forme faciale tridimensionnelle de référence.

2. Le dispositif (100) selon la revendication 1, dans lequel le processeur (105) est configuré pour déterminer une caractéristique de la personne, notamment son âge, son sexe, sa masse ou son indice de masse corporelle, sur la base de l'image faciale (301) de la personne, et pour sélectionner le modèle de visage de référence prédéterminé parmi une pluralité de modèles de visage de référence prédéterminés sur la base de la caractéristique de la personne.

3. Le dispositif (100) selon l'une des revendications précédentes, comprenant :
une interface de communication (107), configurée pour établir une connexion de communication avec un serveur via un réseau de communication et pour transmettre l'image faciale corrigée (303) au serveur via la connexion de communication.

4. Procédé (200) de correction d'une image faciale (301) d'une personne à l'aide d'un dispositif (100), ce dispositif (100) comprenant une caméra d'image (101), un dispositif de détermination de position spatiale (103) et un processeur (105), la caméra d'image (101) étant disposée dans une première position spatiale par rapport au visage de la personne, le procédé (200) comprenant :
capture (201) d'une image du visage de la personne par la caméra d'image (101) afin d'obtenir l'image faciale (301) ;
déterminer (203) la première position spatiale à l'aide d'un modèle de visage de référence prédéterminé par le dispositif de détermination de position spatiale (103), dans lequel le modèle de visage de référence prédéterminé représente une forme de visage de référence tridimensionnelle prédéterminée ;
déterminer (205) un écart de position spatiale d'une deuxième position spatiale par rapport à la première position spatiale par le processeur (105) ; et
perspectivement (207) l'image faciale (301) en fonction de l'écart de position spatiale entre la deuxième position spatiale et la première position spatiale par le processeur (105) afin d'obtenir une image faciale corrigée (303) de la personne, dans laquelle la déformation perspective de l'image faciale est effectuée au moyen d'une transformation d'image tridimensionnelle,
où l'image faciale corrigée (303) est attribuée à la deuxième position spatiale,
où la seconde position spatiale est prédéterminée,
où la première position spatiale et la deuxième position spatiale sont différentes,
**caractérisée en ce que** la première position spatiale est définie par les paramètres de position spatiale suivants : une première distance entre la caméra d'image (101) et le visage de la personne, un premier angle d'azimut de la caméra d'image (101) par rapport au visage de la personne, un premier angle d'élévation de la caméra d'image (101) par rapport au visage de la personne, une première orientation de la caméra d'image (101), une première orientation du visage de la personne, de sorte que la première distance et la perspective correspondant au premier angle d'azimut de la caméra d'image (101), au premier angle d'élévation de la caméra d'image (101), à la première orientation de la caméra d'image (101) et à la première orientation du visage de la personne sont déterminées de manière unique,
dans lequel la seconde position spatiale est définie par les paramètres de position spatiale suivants : une seconde distance entre la caméra d'image (101) et le visage de la personne, un second angle d'azimut de la caméra d'image (101) par rapport au visage de la personne, un second angle d'élévation de la caméra d'image (101) par rapport au visage de la personne, une seconde orientation de la caméra d'image (101), une seconde orientation du visage de la personne, de sorte que la seconde distance et la perspective correspondant au second angle d'azimut de la caméra d'image (101), au second angle d'élévation de la caméra d'image (101), à la seconde orientation de la caméra d'image (101) et à la seconde orientation du visage de la personne soient déterminées de manière unique,
dans lequel, par le dispositif de détermination de position spatiale (103), la première distance entre la caméra d'image (101) et le visage de la personne est déterminée et la première position spatiale est ensuite déterminée en utilisant la première distance entre la caméra d'image (101) et le visage de la personne,
dans lequel, par le dispositif de détermination de position spatiale (103), une paire d'yeux de la personne dans l'image faciale (301) est détectée, une distance entre les yeux de la personne dans l'image faciale (301) est déterminée, et la première distance entre la caméra d'image (101) et le visage de la personne sur la base de la distance entre les yeux est déterminée dans l'image faciale (301),
dans lequel, par le dispositif de détermination de position spatiale (103), une forme faciale tridimensionnelle du visage de la personne est déterminée et la première position spatiale est ensuite déterminée à l'aide de la forme faciale tridimensionnelle du visage de la personne,
dans lequel, grâce au dispositif de détermination de la position spatiale, la forme faciale tridimensionnelle du visage de la personne est comparée à la forme faciale tridimensionnelle de référence prédéterminée et la première position spatiale est déterminée sur la base de la comparaison de la forme faciale tridimensionnelle du visage de la personne avec la forme faciale tridimensionnelle de référence prédéterminée, dans lequel, grâce au dispositif de détermination de la position spatiale, les caractéristiques de la forme faciale tridimensionnelle et de la forme faciale tridimensionnelle de référence sont comparées à cette fin.

5. Un programme informatique comprenant un code de programme pour exécuter la méthode (200) selon la revendication 4, lorsque la méthode (200) est exécutée par le dispositif (100) selon l'une quelconque des revendications 1 à 3, dans lequel le dispositif (100) est configuré de manière programmable pour exécuter le programme informatique.
